(19) Europäisches Patentamt
European Patent Office
Office européen des brevets

(11) Publication number : **0 600 636 A1**

(12) **EUROPEAN PATENT APPLICATION**

(21) Application number : 93309177.9

(22) Date of filing : 17.11.93

(51) Int. Cl.$^5$ : **G01J 1/42**

(30) Priority : **19.11.92 US 978857**

(43) Date of publication of application :
**08.06.94 Bulletin 94/23**

(84) Designated Contracting States :
**DE FR GB**

(71) Applicant : **VARIAN ASSOCIATES, INC.**
**3050 Hansen Way**
**Palo Alto, California 94304-1030 (US)**

(72) Inventor : **Chien, Ring-Ling**
**6428 Edgemoor Way**
**San Jose, CA 95129 (US)**

(74) Representative : **Cline, Roger Ledlie**
**EDWARD EVANS & CO.**
**Chancery House**
**53-64 Chancery Lane**
**London WC2A 1SD (GB)**

(54) **Self-calibrated power meter.**

(57)   Self-calibrated power meter for measuring the radiant power output of a laser which utilizes a specially coated beamsplitter intercepting the laser beam, optical elements for focusing the light beam which is partially transmitted through and partially reflected from the beamsplitter onto photodetectors having different spectral response with respect to the wavelength of said light beam, and producing output signals, the ratio of which define a unique and respective value for each wavelength within the operating range, and a control system for converting the photocurrent to radiant power.

FIG.1

EP 0 600 636 A1

The present invention relates generally to radiant energy measurement devices and more particularly to means for providing an indication of the power and energy output of a laser.

Systems and devices for measuring the energy output of lasers are known as power meters. Power meters measure absolute light power, or energy throughout a broad range of the electromagnetic spectrum. While they are relatively simple instruments compared to other laser devices, power meters are basic instruments for laser users in a variety of applications in the field of optical radiation detection, ranging from basic research in spectroscopy to optical communication and other light measurement systems.

The conventional power meter designed for intercepting the output of a laser beam includes a solid state photocell, generally a silicon photodiode which generates an electrical output signal in response to the interception of the laser beam. The output electrical signal is proportional to the laser beam power.

Since sensitivity of the silicon photodiode varies with wavelength, spectral compensation is required. To convert the output signal to radiant power over the full range of wavelength, the user has to determine the wavelength of the laser output and the calibration constant of the detector for that wavelength. These constants sometimes are provided by the detector's manufacturer as calibration curves applied to the detectors. Most photodiode power meters use calibration curves, pre-set wavelength switches or correction filters, all of which are inconvenient to use and inaccurate. In the advanced photodiode power meters the spectral response curve of the detector and filler is stored in a memory chip. However, none of the available power meters allow automatic calibration of the wavelength of the laser output and measurement of the power directly.

Another problem of the conventional power meters is obtaining accurate power measurements for the laser beam of random polarization or for the beam of unknown polarization. An attempt to avoid polarization sensitivity while measuring the power of the laser beam was made by Duda (US-A-4,842,404). The Duda patent discloses a dual detector laser beam power monitor in which the two photodetectors are positioned in two mutually orthogonal planes for receiving the split light beam from the beam directing means. Such arrangement allows measurements of the output signals with consequent calculation the total light energy power level of the light beam invariant with the polarization of the light beam. However, each photodetector in the apparatus has similar spectral responsivity, and the light having a wavelength outside the region of the sensitivity characteristics cannot be detected.

An optical power meter with automatic switching of photodetectors having different wavelength sensitivity characteristics was disclosed by Shinomura et al. (US-A-4,749,275). Though the power meter in the Shinomura, et al., patent provides a measurement of power of optical signals over a wide wavelength region, its design includes rather complicated light path switching means having mechanical elements. No measurement of the light source wavelength was provided. Furthermore, the actual optical power has to be calculated manually from the measured electrical signal with the knowledge of both the spectral response curves and the wavelength of the light source.

The invention is set out in its various aspects in the independent claims of this specification.

An example of the invention will now be described with reference to the accompanying drawings in which:

FIG. 1 is a block diagram of a self-calibrated power meter head according to one preferred embodiment of the present invention.

FIG. 2 and FIG. 3 are block diagrams of a self-calibrated power meter head according to another preferred embodiment of the present invention.

FIG. 4 is a graph illustrating the responses of photodetectors 1 and 2 as a function of wavelength.

FIG. 5 is a graph illustrating the ratio of the responses of two photodetectors as a function of wavelength.

FIG. 6 is a graph illustrating the ratio of the response of two photodetectors as a function of wavelength for a multirange system.

FIG. 7 is a block diagram of the control system for the self-calibrated power meter.

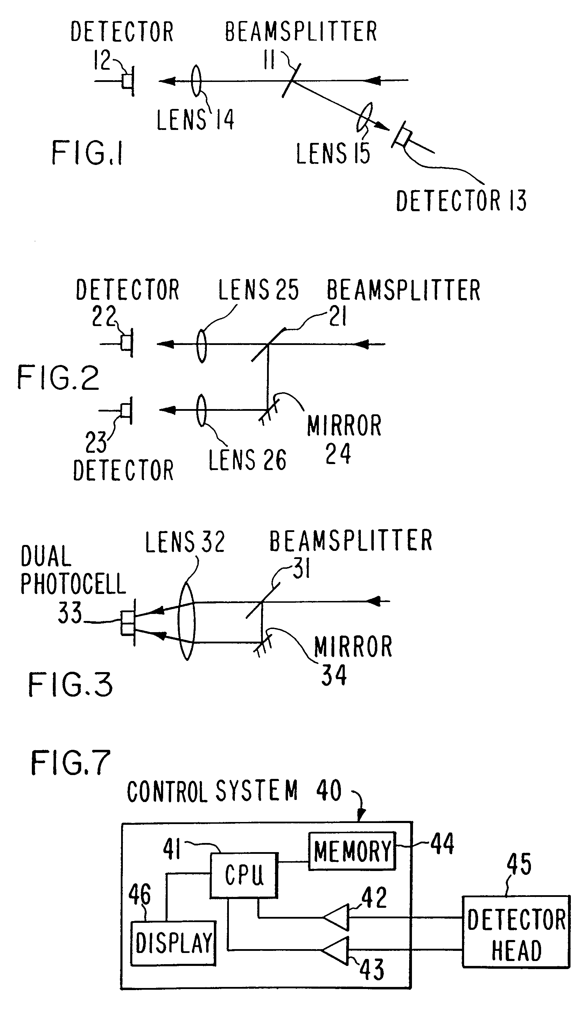

As shown in Fig. 1, a detector head of the power meter may be constructed from a beamsplitter 11, photodetectors 12 and 13 and the optical elements 14 and 15 to focus the incoming radiation to the photodetectors 12 and 13.

The beamsplitter 11 and photodetector 12 are positioned in the first axis to form the first optical path in the plane of the incident light of the laser beam with the optical element 14 which is positioned between beamsplitter 11 and photodetector 12. The photodetector 13 is disposed on the second axis with the optical element 15 positioned between the beamsplitter 11 and photodetector 13 to form the second optical path in the plane of the reflected light from the beamsplitter 11.

The light beam is incident upon the surface of the beamsplitter 11 at an oblique angle to the normal of the detector 13. The angle between the first and second axes has a value for which the reflected beam from beamsplitter 11 will be invariant in terms of the reflection of the two plane-polarized components of the incident unpolarized light. As it is follows from Fresnel's laws of reflection, the angle of incidence of the light beam to the beamsplitter 11 should not be more than 20° to avoid the dependence of the reflected beam power from beam polarization.

The other preferred embodiments of the detector head shown in Fig. 2 and Fig 3 provide a measurement of the power of the polariaed laser beam when the type of polarization is known in advance. This could be achieved by using a polarizer in front of the beamsplitter. The attenuation of the laser power due to the polarizer intersecting the laser beam may be corrected in advance.

In Fig. 2 the beamsplitter 21 intersects the light beam from the laser, and positioned on the first axis. Photodetectors 22 and 23 are disposed on the first and second axes respectively where the first axis is parallel to the second one.

Partially transmitted light from beamsplitter 21 is directed to the photodetector 21 trough focusing lens 25, and partially reflected light is directed to the photodetector 23 through a mirror 24 and focusing lens 26 which are placed on the second axis. Mirror 24 totally reflects the portion of the reflected light from beamsplitter 21.

In Fig. 3 the arrangement of optical elements in the detector head is shown where the laser beam is directed through beamspliitter 31. The beam is split to obtain partially transmitted and reflected light beams which are then focused together through lens 32 onto both photodetectors combined in one dual photocell 33.

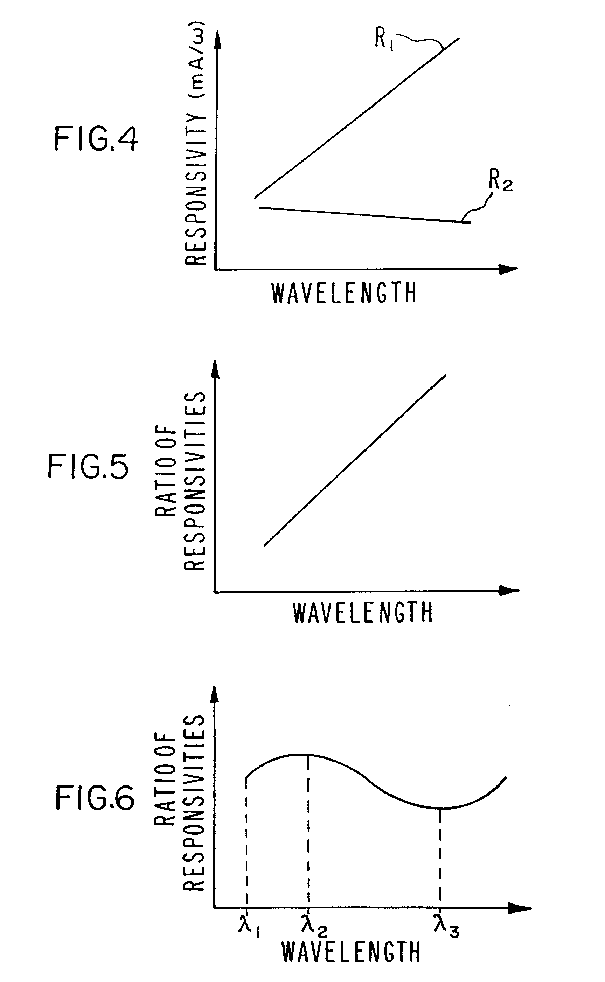

The beamsplitter for each preferred embodiment is coated in such a way that the output signals from the two photocells are different with respect to the same wavelength of light. FIG. 4 shows a typical arrangement of these different responses over a range of wavelengths of interest. The ratio of two responses, as shown in FIG. 5, is unique for any wavelength in this range. Consequently, one could obtain the value of the wavelength from the ratio of responsivities. It is also possible to have two or more ranges of unique response as shown in FIG. 6. In such a multirange power meter, the user is required to have a rough knowledge of the wavelength of the measured radiation. The meter will then be able to provide the precise wavelength and the calibrated power.

This information is transferred to control system which is schematically shown in Fig. 7. The control system 40 includes a pair of operational amplifiers 42 and 43, a central processing unit 41 (such as an Intel 8088 microprocessor), a memory unit 44, and display means 46. The control system 40 is connected to the detector head 45. The output electrical signal from the photodetectors of the detector head 45 is transferred to a central processing unit 41 through operational amplifiers42 and 43. The memory unit 44 is connected to the central processing unit 41.

Each individual detector path includes the beamsplitter, optical element, and photodetector. The response (signal versus wavelength) of each individual path is calibrated in advance. This information is stored in a memory card that is plugged into the memory unit 44. For each detector head, there is a memory card that contains the corresponding information. The information obtained from central processing unit 41 may be observed by display means 46.

The procedure of the measurement is as follows. The incident radiation of power P at wavelength $\lambda$ will generate two different photocurrents, $I_a$ and $I_b$ on the photocells according to their spectral responsivities:

$$PR_a(\lambda) = I_a$$
$$PR_b(\lambda) = I_b$$

where $R_a(\lambda)$ and $R_b(\lambda)$ are the spectral responses of two photocells a and b respectively at the wavelength $\lambda$.

These two currents $I_a$ and $I_b$, are then fed into amplifiers 42 and 43 respectively, and sent to the central processing unit 41 as shown in FIG. 7. The central processing unit provides calculation of the ratio of two measured currents, comparison and determination of the value equal to the ratio obtained from the calibrated value stored in the memory card of the memory unit 44.

$$\text{Since } R_a(\lambda)/R_b(\lambda) = I_a/I_b$$

is true only for one specific wavelength, the measurement of $I_a/I_b$ yields the knowledge of the wavelength and the radiant power can then be calculated automatically by the meter using

$$P = I_a/R_a(\lambda)$$

or

$$P = I_b/R_b(\lambda)$$

Finally, the information on the wavelength and power is sent to the display unit.

## Claims

1. A laser power meter comprising:

light beam directing means positioned along a first axis of the light beam for reflecting a fraction of said light beam along a second axis and transmitting a second fraction of said light beam therethrough along said first axis, wherein the angle between said first and said second axes is set to provide no variation of reflected beam power as a function of the beam polarization;

first and second photodetector means located on said first and second axes respectively for receiving said reflected fraction and transmitted fraction of said light beam and producing a first and second output signal, said first and second photodetector means having a first and second calibrated spectral response with respect to the wavelength of said light beam, whereby said first and second form a ratio output signal having a unique and respective value for each wavelength of said light beam within the range of operating wavelength;

control system means coupled to said first and second photodetector means for analyzing the output signals therefrom and obtaining the value of wavelength and radiation power of said light beam.

2. The laser power meter of claim 1 wherein said control system means further comprising:

a) a pair of operational amplifiers having inputs and' outputs, said inputs connected to outputs of said first and second detectors respectively;

b) a central processing unit for obtaining and analyzing information from said amplifiers, said central processing unit connected to said outputs of said amplifiers; and

c) a memory unit having a slot for receiving response function cards, said response function cards each having said calibrated spectral responsivity of said first and second photodetectors, said memory unit connected to said central processing unit for obtaining and analyzing information from said response function cards; and

d) display means for observing the value of wavelength and radiation power of said light beam source means, said display means connected to said control processing unit of said control system means.

3. A laser power meter comprising:

light beam means for directing a light beam along a first axis, said light beam being polarized in one of two orthogonal directions normal to said first axis;

a beamsplitter located on said first axis for splitting said light beam into transmitted and reflected beams wherein the power of said transmitted and reflected beams is a function of wavelength of said light beam;

a first photodetector having a first calibrated spectral response with respect to the wavelength of said light beam, said first photodetector placed on said first axis to receive said transmitted light, said transmitted light producing a first output signal;

a second photodetector having a second calibrated spectral response with respect to the wavelength of said light beam positioned on said second axis to receive said reflected light, said reflected light producing a second output signal, whereby said first and second output signals form a ratio having a unique and respective value for each wavelength of said light beam within the operating range of wavelength;

control system means for converting photocurrent from said first and second detectors to voltage, and obtaining the value of wavelength and radiation power of said light beam, said control system means including:

a) a pair of operational amplifiers hewing inputs and outputs, said inputs connected to outputs of said first and second detectors respectively;

b) a central processing unit for obtaining and analyzing information from said amplifiers, said central processing unit connected to said outputs of said amplifiers; and

c) a memory unit having a slot for receiving in response function cards, each said response function cards having said calibrated spectral responsivity of said first and second photodetectors, said memory unit connected to said central proccessing unit for obtaining and analyzing information from said response function cards; and

d) display means for observing the value of wavelength and radiation power of said light beam source means, said display means connected to said control processing unit of said control system means.

4. The laser power meter of claim 1 or 3 further comprising first and second lenses for focusing said light beam from said light beam source means onto said first and second detectors, said first and second lenses located on said first and second axes between said first detectors and said light beam means and said second detector and said light beam means respectively.

5. A method of self-calibrating a laser power meter comprising the step of:

a) plugging in a response function card of a pair of photodetectors to a memory unit;

b) directing the light from a light beam means onto a pair of photodetectors through a beamsplitter, said beamsplitter coated to transmit and reflect light in such a way wherein the ratio of output signals from said photodetectors has a value which corresponds to the wavelength and the polarization of said light beam in a working range of wavelength;

c) acquiring said output signals from said first and second photodetectors, said first and second photodetectors having different calibrated spectral response with respect to the wavelength,

d) transmitting said output signals from said photodetectors through amplifiers to a central processing unit of a control system means,

e) measuring response signals from said photodetectors;

f) obtaining a first ratio of response signal from said first and second photodetectors by said central processing unit;

g) computing a second ratio of the calibrated response function of said photodetectors by said central processing unit;

h) comparing said first ratio of measured response signals with said second ratio of calibrated response signal to obtain the value of the wavelength of said light source means;

i) calculating the laser power by dividing the measured signal of said first detector by the obtained value of the calibrated response function.

6. A method of self-calibrating of a laser power meter comprising the steps of:

a) plugging in a response function card of a pair of photodetectors to a memory unit, said photodetectors having multiple operating range of wavelengths;

b) selecting one working range of wavelength from said operating range of wavelengths;

c) directing the light from a light beam means onto said pair of photodetectors through a beamsplitter;

d) acquiring output signals from said first and second photodetectors, said first and second photodetectors having different calibrated spectral responsivity with respect to the wavelength;

e) transmitting said output signal from said photodetector through amplifiers to a central processing unit of a control system means;

f) measuring a response signal from each said photodetector;

g) obtaining a first ratio of response signals from said first and second photodetectors by said central processing unit;

h) computing a second ratio of calibrated response function. of said photodetectors by said central processing unit;

i) comparing said first ratio of measured response signal with said second ratio of calibrated response signal from said working range of step (b) to obtain the value of the wavelength of said light source means;

j) calculating the laser power by dividing the measured signal of said first detector by the obtained value of the calibrated response function.

7. The method of claim 6 wherein each of said multiple working ranges is characterized by a unique ratio of responses of said photodetectors.

8. The method of claim 7 wherein said multiple working ranges have at least two preicrable working ranges.

9. The method of claim 8 wherein said first preferable working range is a visible region of the spectrum, and the second working range is a near infrared region of the spectrum.

DETECTOR    BEAMSPLITTER

12    11

LENS 14

**FIG.1**

LENS 15

DETECTOR 13

DETECTOR    LENS 25    BEAMSPLITTER

22    21

**FIG.2**

23

DETECTOR    LENS 26    MIRROR
24

DUAL    LENS 32    BEAMSPLITTER
PHOTOCELL    31

33

MIRROR
34

**FIG.3**

**FIG.7**

CONTROL SYSTEM    40

41    MEMORY    44

CPU

46    45

42

DISPLAY    DETECTOR
HEAD

43

FIG.4

FIG.5

FIG.6

**European Patent Office**

# EUROPEAN SEARCH REPORT

Application Number

EP 93 30 9177

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DE-A-24 17 411 (DEUTSCHE FORSCHUNGS- UND VERSUCHSANSTALT FÜR LUFT- UND RAUMFAHRT) <br> * page 1, line 1 - line 3 * <br> * page 2, line 14 - page 3, line 3 * <br> * page 2, last line - page 4, line 14 * <br> * figures * | 1,4 | G01J1/42 |
| X | EP-A-0 001 714 (THE POST OFFICE) <br> * page 1, last paragraph * <br> * page 2, line 25 - page 3, line 14 * <br> * page 4, line 1 - line 4 * | 1 | |
| Y | * page 4, line 33 - line 34; figure 1 * | 2,3,5 | |
| Y | GB-A-2 141 220 (PHILIPS) <br> * page 1, line 37 - line 51 * | 2,3,5 | |
| A | * page 2, line 17 - line 38; figure 2 * | 6 | |
| Y | PATENT ABSTRACTS OF JAPAN <br> vol. 12, no. 380 (P-769)12 October 1988 <br> & JP-A-63 127 127 (MATSUSHITA) 31 May 1988 <br> * abstract * | 1 | |
| D,Y | US-A-4 842 404 (DUDA) <br> * abstract * <br> * column 3, paragraph 3 * | 1 | **TECHNICAL FIELDS SEARCHED** (Int.Cl.5) <br><br> G01J |
| D,A | * column 4, line 20 - line 44; figure 2 * | 3 | |
| A | EP-A-0 351 291 (RADIO CONTROLE) <br> * abstract * <br> * column 1, line 52 - line 57; figure 1 * | 2,3,5,6 | |
| A | EP-A-0 305 154 (TOKYO ELECTRIC) <br> * abstract * <br> * column 2, line 34 - line 37; figure 1 * | 2,3,5,6 | |

The present search report has been drawn up for all claims

| Place of search | Date of completion of the search | Examiner |
|---|---|---|
| THE HAGUE | 29 March 1994 | Thomas, R.M. |

EPO FORM 1503 03.82 (P04C01)